# EUROPEAN PATENT APPLICATION

(11) **EP 3 413 417 A1**
(43) Date of publication of application: **12.12.2018**
(21) Application number: 16889503.5
(22) Date of filing: 06.07.2016
(51) Int. Cl.: H02G 11/02, H02G 9/02

(54) **DUAL TURNTABLE FOR SUBMARINE CABLE**

(30) Priority: 05.02.2016 KR 20160014602
(71) Applicant: LS Cable & System Ltd., Anyang-si, Gyeonggi-do 14119 (KR)
(72) Inventor: KIM, Tae-Seong, Seongnam-si Gyeonggi-do 13519 (KR); KIM, Jong-Hae, Seoul 07064 (KR); LIM, Young-Seok, Incheon 21017 (KR); JUNG, Soon-Chul, Uijeongbu-si Gyeonggi-do 11638 (KR); LI, Ningxue, Anyang-si Gyeonggi-do 13930 (KR); GOO, Jae-Hoon, Seoul 08250 (KR)
(74) Representative: advotec.
(86) International application number: PCT/KR2016/007293
(87) International publication number: WO 2017/135525

(57) **Abstract**

The present invention relates to a double turntable for a submarine cable. The double turntable for a submarine cable according to the present invention comprises a lower turntable configured to be rotatable such that the submarine cable is wound therearound; an upper turntable configured to be rotatable independently from the lower table such that the submarine cable is wound around the upper turntable after being wound by a certain length around the lower turntable, the upper turntable being located above the lower turntable and including a path via which the submarine cable passes through to be wound around the lower turntable; and a loading arm configured to be rotated in connection with the upper turntable and to guide the submarine cable moved toward the lower turntable via the path to be movable in a vertical direction and a horizontal direction.

## Description

### TECHNICAL FIELD

The present invention relates to a double turntable for a submarine cable.

### BACKGROUND ART

Recently, with industrial development, technology related to cables for transmitting power and/or an electrical signal to various devices has been developed. A cable includes therein a conductor formed of copper or aluminum to transmit power or an electrical signal.

Furthermore, such a cable may be used to not only connect lands but also connect continents across the sea. In the case of a submarine cable installed at the bottom of a sea across the sea, the submarine cable is installed by moving it using a vessel or the like.

In order to move the submarine cable using a vessel or the like as described above, a structure for winding the submarine cable around the vessel, a so-called 'turntable', may be provided. The turntable is configured to wind the submarine cable therearound while rotating. However, accommodating the submarine around the turntable is limited, and particularly, a structure preventing the submarine cable from being damaged or malfunctioning is needed when the submarine cable is wound around the turntable.

### DETAILED DESCRIPTION OF THE INVENTION

### TECHNICAL PROBLEM

In order to address the above-described problem, the present invention is directed to a turntable around which a longer submarine cable can be wound than that according to the related art.

The present invention is also directed to a turntable capable of preventing a submarine cable from being damaged or malfunctioning when the submarine cable is wound around the turntable.

### TECHNICAL SOLUTION

An embodiment of the dual turntable for a submarine cable around which the submarine cable is wound, the dual turntable may comprise a lower turntable configured to be rotatable such that the submarine cable is wound therearound; an upper turntable configured to be rotatable independently from the lower table such that the submarine cable is wound around the upper turntable after being wound by a certain length around the lower turntable, the upper turntable being located above the lower turntable and including a path via which the submarine cable passes through to be wound around the lower turntable; and a loading arm configured to be rotated in connection with the upper turntable and to guide the submarine cable moved toward the lower turntable via the path to be movable in a vertical direction and a horizontal direction.

And the loading arm may comprise a curved part having a radius of curvature which is greater than or equal to a minimum bending radius (MBR) of the submarine cable.

And the upper turntable may comprise a base including an opening in a central portion thereof; and an inner wall and an outer wall respectively provided at an inner side and an outer side of the base to form an accommodation part at the base to accommodate the submarine cable.

And the path through which the submarine cable passes may be formed at the base to be adjacent to the opening.

And the upper turntable may comprise a counter weight corresponding to a load of the loading arm, the counter weight being located at a side of the upper turntable opposite the loading arm.

And the dual turntable may further comprise position sensors configured to respectively sense speeds of rotation of the respective upper and lower turntables.

And the dual turntable may further comprise a pressure sensor configured to sense load on the submarine cable wound around the upper turntable and load on the submarine cable wound around the lower turntable.

And the loading arm may comprise at least one joint part for movement of the submarine cable in the vertical direction.

And the loading arm may comprise an extension part for movement of the submarine cable in the horizontal direction.

And the dual turntable may further comprise a band stiffener configured to prevent the submarine cable from being bent to a radius of curvature which is less than a minimum bending radius (MBR) when the submarine cable is wound around the upper turntable, the band stiffener being provided on an end portion of the loading arm facing the upper turntable to cover the submarine cable.

And the band stiffener may be arranged between a guide arm and the loading arm, the guide arm guiding the submarine cable to the dual turntable from the outside.

And when the submarine cable is bent, a degree of hardness of the band stiffener may increase and limits the bending of the submarine cable.

And the band stiffener may comprise a pipe type body member in which an accommodation part is formed in a lengthwise direction to allow the submarine cable to pass therethrough and accommodate the submarine cable therein.

And the body member is formed of a resin material, the accommodation part of the body member has a uniform diameter, and an external diameter of the body member has a diameter reduction part tapering toward the loading arm.

And the dual turntable may further comprise a displacement sensor configured to measure a degree and direction of bending the submarine cable when the submarine cable is wound around the double turntable.

And the displacement sensor may be arranged on the submarine cable or the band stiffener.

And the displacement sensor may comprise a first fixing member and a second fixing member configured to allow the submarine cable or the band stiffener to pass therethrough, the first fixing member and the second fixing member being arranged on the submarine cable or the band stiffener to be spaced apart from each other; and at least one connecting member configured to connect the first fixing member and the second fixing member, wherein the degree and direction of bending the submarine cable are measured on the basis of a change in a length of the connecting part bent when the submarine cable or the band stiffener is bent and a direction of the bending of the connecting part.

And when the submarine cable is bent due to a difference between a speed of rotation of the lower turntable and a speed of rotation of the upper turntable during winding of the submarine cable around the upper turntable after the submarine cable is wound around the lower turntable, the speed of rotation of the lower turntable or the upper turntable may be controlled to reduce the degree of bending of the submarine cable.

And when the lower turntable rotates faster than the upper turntable or when the lower turntable rotates but the upper turntable does not rotate, the speed of rotation of the upper turntable may be increased to rotate the upper turntable at substantially the same speed as the lower turntable.

And when the lower turntable rotates more slowly than the upper turntable, the speed of rotation of the upper turntable may be reduced by rotate the upper turntable at substantially the same speed as the lower turntable.

And when the upper turntable rotates but the lower turntable does not rotate, the rotation of the upper turntable may be stopped.

An embodiment of the method of winding a submarine cable around the dual turntable of anyone of claims 1 to 14 by winding the submarine cable by a certain length around the lower turntable via the upper turntable and winding the submarine cable around the upper turntable, the method may comprise fixing one end portion of the submarine cable drawn toward the lower turntable through the loading arm onto the lower turntable; winding the submarine cable around the lower turntable by rotating the lower turntable at a certain speed; and winding the submarine cable around the upper turntable by rotating the upper turntable at substantially the same speed as the lower turntable after the submarine cable is wound by the certain length around the lower turntable.

And the winding of the submarine cable around the lower turntable and the winding of the submarine cable around the upper turntable may comprise moving the submarine cable in a moving path spaced a certain distance from a center of an opening of the upper turntable and having a radius of curvature which is greater than or equal to a minimum bending radius (MBR) of the submarine cable.

And the winding of the upper turntable around the submarine cable further may comprise stopping the rotation of the lower turntable after the submarine cable is wound by the certain length around the lower turntable; and rotating the upper turntable and the lower turntable at the same speed.

### ADVANTAGEOUS EFFECTS

According to the above-described present invention, a double turntable including an upper turntable and a lower turntable and thus capable of winding a longer submarine cable therearound than a turntable according to the related art may be provided.

Furthermore, damage to or malfunction of the submarine cable when the submarine cable is wound around the double turntable may be prevented by maintaining a radius of rotation of a loading arm guiding the submarine cable to be equal to or greater than a minimum bending radius (MBR).

### DESCRIPTION OF THE DRAWINGS

FIGS. 1 and 2 are partially cutaway perspective views of submarine cables according to various embodiments.
FIG. 3 is a schematic diagram of a vessel for moving the submarine cable.
FIGS. 4 and 5 are perspective views of a double turntable installed in the vessel.
FIG. 6 is a partial perspective view of a loading arm of the double turntable.
FIG. 7 is a cross-sectional view of the loading arm.
FIG. 8 is a schematic diagram illustrating movement of the loading arm in a vertical direction.
FIG. 9 is a perspective view of an end portion of the loading arm.
FIG. 10 is a perspective view of a double turntable according to another embodiment.
FIG. 11 is a perspective view of a double turntable according to another embodiment.
FIG. 12 is a perspective view and a cross-sectional view of a band stiffener and a displacement sensor illustrated in FIG. 11.
FIG. 13 illustrates a perspective view and a cross-sectional view of the band stiffener.
FIG. 14 is a perspective view of the displacement sensor.

### MODE OF THE INVENTION

Hereinafter, various embodiments of the present invention will be described in detail with reference to the accompanying drawings . First, a structure of a submarine cable will be described and then a structure of a turntable for winding the submarine cable there around and a method of winding the submarine cable around the turntable will be described below.

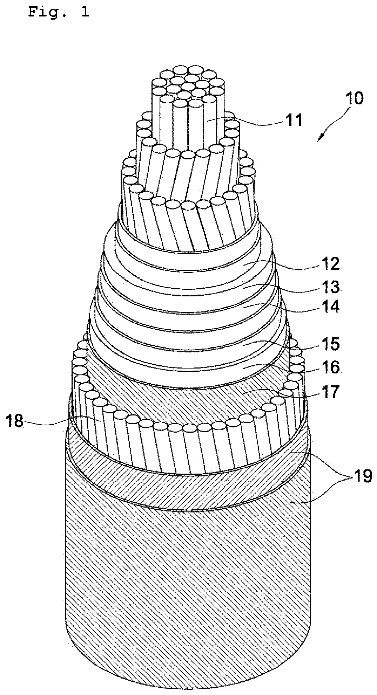

FIG. 1 is a perspective view of an inner structure of a submarine cable 10.

Referring to FIG. 1, the submarine cable 10 includes a conductor 11 in a central region thereof. The conductor 11 may act as a path through which current flows and may be formed of, for example, copper or aluminum. The conductor 11 is formed by twisting a plurality of element wires 11.

However, the conductor 11 may have a non-smooth surface and thus an electric field thereon may not be uniform. Accordingly, a corona discharge is likely to occur locally in the conductor 11. The insulating performance of the conductor 11 may deteriorate when there is a gap between a surface of the conductor 11 and an insulating layer 13 which will be described below. To solve the problems, an outer side of the conductor 11 is covered with a semiconducting material such as semiconducting carbon paper. A layer formed by the semiconducting material will be referred to herein as an inner semiconducting layer 12.

The inner semiconducting layer 12 uniformizes a distribution of electric charges on a surface of the conductor 11 to obtain a uniform electric field, thereby improving the dielectric strength of the insulating layer 13 to be described below. Furthermore, the inner semiconducting layer 12 prevents formation of a gap between the conductor 11 and the insulating layer 13 to prevent a corona discharge and ionization.

The insulating layer 13 is provided on an outer side of the inner semiconducting layer 12. The insulating layer 13 electrically insulates the conductor 11 from the outside. Generally, a breakdown voltage of the insulating layer 13 should be high and insulating performance thereof should be stably maintained for a long time period. Furthermore, the insulating layer 13 should have a low dielectric loss rate and heat resistance performance, e.g., a heat resistance property. Accordingly, the insulating layer 13 may be formed of polyolefin resin such as polyethylene and polypropylene, and preferably, polyethylene resin. Here, the polyethylene resin may be crosslinked resin, and may be prepared with silane or organic peroxide, e.g., dicumyl peroxide (DCP), as a crosslinking agent.

When not only the inside of the insulating layer 13 but also an outer side thereof is not shielded, a part of an electric field is absorbed by the insulating layer 13 but a most part thereof is discharged to the outside. In this case, when the electric field increases to a certain value ormore, the outer sides of the insulating layer 13 and the submarine cable 10 may be damaged due to the electric field. Thus, a semiconducting layer is provided at the outer side of the insulating layer 13. The semiconducting layer will be referred to as an outer semiconducting layer 14 to be differentiated from the inner semiconducting layer 12. The outer semiconducting layer 14 improves the dielectric strength of the insulating layer 13 by making a distribution of an electric line of force between the outer semiconducting layer 4 and the inner semiconducting layer 12 to be equipotential. Furthermore, the outer semiconducting layer 14 may planarize a surface of the insulating layer 13 to lessen a concentration of an electric field in the submarine cable 10, thereby preventing a corona discharge.

A metal sheath formed of lead, a so-called 'lead sheath' 15, is provided on an outer side of the outer semiconducting layer 14 to prevent deterioration of the insulating performance of the insulating layer 13 due to invasion of a foreign substance, such as water, into the insulating layer 13.

Furthermore, a bedding layer 17 is provided on an outer side of the metal sheath 15 to prevent contact between a sheath 16 formed of resin, such as polyethylene, and water. A sheathing wire 18 may be provided on the bedding layer 17. The sheathing wire 18 is provided at the outer side of the submarine cable 10 to increase the mechanical strength of the submarine cable 10 so that the submarine cable 10 may be protected from a submarine environment.

A jacket 19 is provided as a cable exterior at an outer side of the sheathing wire 18, i.e., the outer side of the submarine cable 10. The jacket 19 is provided at the outer side of the cable 10 to protect the inner components of the submarine cable 10. In particular, in the case of the submarine cable 10, the jacket 19 has weather resistance and high mechanical strength to endure the submarine environment such as seawater. For example, the jacket 19 may be formed of polypropylene yarn or the like.

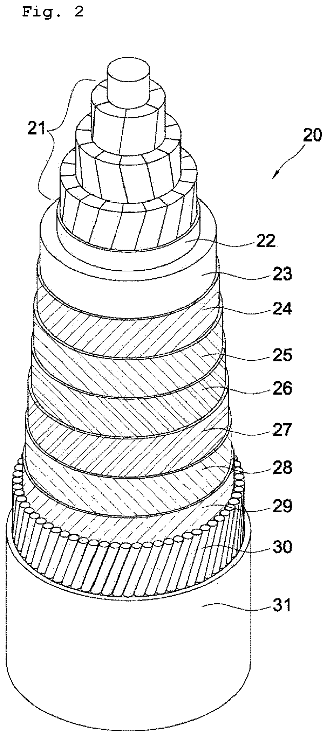

FIG. 2 illustrates an inner structure of a submarine cable according to another embodiment.

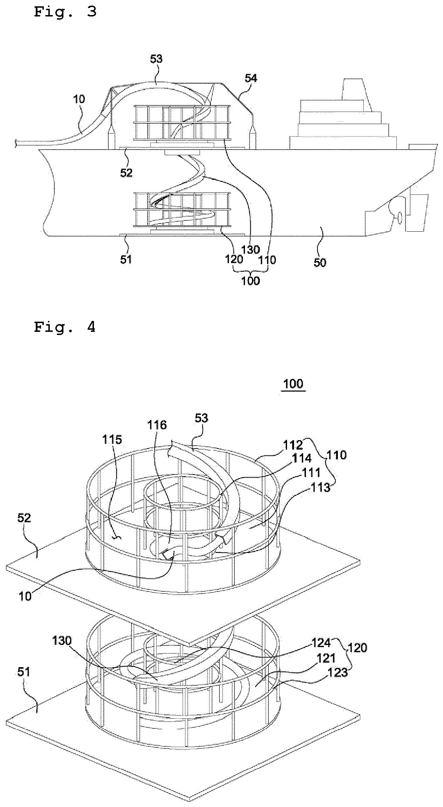

Referring to FIG. 2, a submarine cable 20 includes a conductor 21 in a central part thereof. The conductor 21 acts as a path through current flows. As illustrated in the drawings, the conductor 21 may include a flat element wire layer 21C having a round central element wire 21A and flat element wires 31B twisted together to cover the central element wire 21A. The flat element wire layer 21C is manufactured by forming the flat element wires 21B to have tetragonal cross-sections by a continuous extrusion process and twisting the flat element wires 21B together on the central element wire 21A. The conductor 21 is formed in a round shape. As illustrated in FIG. 3, the conductor 21 may be formed by twisting a plurality of element wires together. However, a conductor formed of flat element wires has a higher space factor than that of a conductor formed of round element wires and thus may be appropriate for a high-voltage power cable.

An inner semiconducting layer 22 formed on a surface of the conductor 21 and an outer semiconducting layer 24 formed on a surface of an insulating layer 23 which will be described below are substantially the same as those described above with reference to FIG. 1 and thus are not described again here.

The insulating layer 23 is provided at an outer side of the inner semiconducting layer 22. The insulating layer 23 electrically insulates the conductor 21 from the outside. In FIG. 2, the insulating layer 23 is formed by a paper insulation process of winding insulation paper around a surface of the inner semiconducting layer 22. In order to improve an insulating property of the submarine cable 20, the conductor 21 is impregnated with insulation oil in a state in which the surface of the conductor 21 is wound with the insulation paper. The insulation oil is absorbed into the insulation paper through the impregnation process. The submarine cable 20 may be classified as an 'oil-filled (OF) cable' or a 'mass-impregnated (MI) cable' according to the viscosity of the insulation oil.

The OF cable is limited in terms of length extension, since the insulation paper is impregnated with relatively low viscosity insulation oil and thus the OF cable is operated by applying pressure to the insulation oil to maintain oil pressure constant. In contrast, the MI cable is advantageous in that it can be extended longer, since the insulation paper is impregnated with relatively high viscosity insulation oil and thus a flow rate of the insulation oil in the insulation paper is low to remove a need to maintain oil pressure constant.

In the present embodiment, the insulating layer 23 may be formed by rolling up a plurality of piecesof insulation paper. For example, the insulating layer 23 may be formed by repeatedly rolling up either Kraft paper or Kraft paper and thermoplastic resin such as polypropylene resin.

In detail, the insulating layer 23 may be formed by rolling up only Kraft paper but is preferably formed by rolling up composite insulation paper, e.g., insulation paper having a structure in which Kraft paper is stacked at the top and bottom of polypropylene resin.

The outer semiconducting layer 24 is provided at an outer side of the insulating layer 23 as described above in detail with reference to FIG. 1. The outer semiconducting layer 24 is as described above in detail with reference to FIG. 1 and thus is not described again here.

A woven copper wire tape 25 is provided at an outer side of the outer semiconducting layer 24. The insulation performance of the insulation oil impregnated in the insulating layer 23 or an insulation compound deteriorates when a foreign substance such as water penetrates therein. To solve this problem, a metal sheath formed of lead, i.e., a so-called 'lead sheath' 26, is provided at an outer side of the woven copper wire tape 25.

Furthermore, a bedding layer 27 is provided at an outer side of the metal sheath 26 to prevent the metal sheath 26 from being in direct contact with water. Anon-woven fabric tape 24 and a proofed tape 26 are formed on the bedding layer 27 to cover the bedding layer 27. The submarine cable 20 further includes a sheathing wire 30 to cover the outer side of the submarine cable 20 with wires to increase mechanical strength, so that the submarine cable 20 may be protected from a submarine environment. In detail, the sheathing wire 30 may be provided at an outer side of the proofed tape 29 or the outer side of the proofed tape 29 may be wound with a non-woven fabric tape (not shown) and then the sheathing wire 30 may be provided on the non-woven fabric tape.

A jacket 31 is provided as a cable exterior at an outer side of the sheathing wire 30, i.e., the outer side of the submarine cable 20. The jacket 31 is provided at the outer side of the submarine cable 20 to protect the inner components of the submarine cable 20. In particular, in the case of the submarine cable 20, the jacket 31 has weather resistance and high mechanical strength to endure a submarine environment, such as seawater. For example, the jacket 31 may be formed of polypropylene yarn or the like.

FIG. 3 is a schematic diagram of a vessel for installing a submarine cable having a structure as described above at the bottom of the sea.

Referring to FIG. 3, a vessel 50 includes a double turntable 100 around which a submarine cable 10 is wound. The double turntable 100 includes an upper turntable 110 and a lower turntable 120. As illustrated in the drawings, the upper turntable 110 may be installed on a deck 52 of the vessel 50 or the like, and the lower turntable 120 may be installed on a bottom board 51 at the bottom of the deck 52 or the like.

In this case, the submarine cable 10 is brought to the double turntable 100 from the outside of the vessel 50 through a guide arm 53 included in the vessel 50. In detail, in order to wind the submarine cable 10 around the double turntable 100, the submarine cable 10 is brought to the double turntable 100 through the guide arm 53 fixed at the deck 52 of the vessel 50 by a fixing part 54. In this case, the submarine cable 10 is first wound to a certain degree around the lower turntable 120 which is a lower part of the double turntable 100 and is thereafter wound around the upper turntable 110 which is an upper part of the double turntable 100. A structure of the double turntable 100 will be described in detail with reference to the drawings.

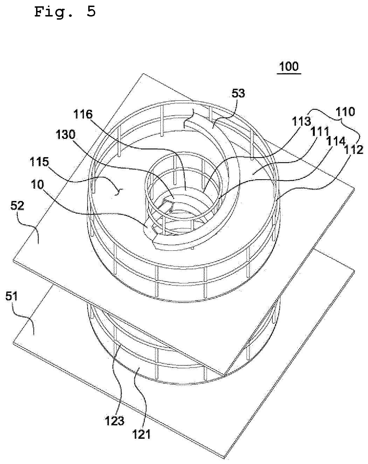

FIG. 4 is a side perspective view of the double turntable 100. FIG. 5 is a top perspective view of the double turntable 100.

Referring to FIGS. 4 and 5, the double turntable 100 includes the lower turntable 120 configured to be rotatable to wind the submarine cable 10 therearound; the upper turntable 110 located above the lower turntable 120, providing a path through which the submarine cable 10 passes to be wound around the lower turntable 120, and configured to be rotatable independently from the lower turntable 120 to wind the submarine cable 10 therearound after the submarine cable 10 is wound to the certain degree around the lower turntable 120; and the loading arm 130 configured to be rotated in connection with the upper turntable 110 and to guide the submarine cable 10, which is to be brought to the lower turntable 120 via the path, to be moved in vertical and horizontal directions.

The upper turntable 110 is provided on the deck 52 of the vessel 50 or the like to be rotatable. For example, although not shown, the upper turntable 110 may be provided on the deck 52 to be rotatable through a bearing. The lower turntable 120 may be located below the upper turntable 110, and configured to be rotatable independently from the upper turntable 110. In this case, the upper turntable 110 and the lower turntable 120 may include one driving part and be controlled to be rotated at different speeds by a speed reducer or the like. However, when the submarine cable 10 is wound around the upper turntable 110 and the lower turntable 120, the upper turntable 110 and the lower turntable 120 each weigh several tons and thus are preferably driven by different driving parts.

As illustrated in the drawings, the upper turntable 110 includes a base 111 having an opening 113 at a center region thereof, and an inner wall 114 and an outer wall 112 provided at an inner side and an outer side of the base 111 to form an accommodation part 115 at the base 111 to accommodate the submarine cable 10.

The base 111 supports the submarine cable 10 wound around the upper turntable 110 from below, and forms the accommodation part 115 accommodating the submarine cable 10, together with the inner wall 114 and the outer wall 112. In this case, the opening 113 of the base 111 may act as a path through which the submarine cable 10 passes to be first wound around the lower turntable 120. That is, the submarine cable 10 moved to the upper turntable 110 via the guide arm 53 is brought to the lower turntable 120 via the opening 113. In detail, as illustrated in FIG. 5, the submarine cable 10 pulled out of the guide arm 53 passes through the inner wall 114 of the upper turntable 110 while covering the inner wall 114 to a certain degree and then is brought to the lower turntable 120 via the opening 113. The inner wall 114 and the outer wall 112 may be provided in the form of a frame as illustrated in the drawings, and configured to withstand the weight of the submarine cable 10 when the submarine cable 10 is accommodated in the accommodation part 115.

The lower turntable 120 has substantially the same structure as the upper turntable 110, in that the lower turntable 120 includes a base 121, an inner wall 124, and an outer wall 123 but an opening may not be formed in a central part of the base 121.

In the above-described double turntable 100, first, the submarine cable 10 is wound to a certain degree around the lower turntable 120 and then is wound around the upper turntable 110. That is, the submarine cable 10 may be wound around both the upper turntable 110 and the lower turntable 120. Accordingly, a longer submarine cable may be accommodated than that in a single turntable structure.

In the double turntable 100, the submarine cable 10 is first wound around the lower turntable 120 via the upper turntable 110. In this case, the loading arm 130 is needed to guide the submarine cable 100 to be brought to the lower turntable 120.

The loading arm 130 is configured to rotate in connection with the upper turntable 110. For example, the loading arm 130 may be fixed at an inner side of the opening 113 of the base 111 of the upper turntable 110. A sidewall 116 extending downward by a certain length from an outer circumference of the opening 113 may be provided, and the loading arm 130 may be fixed onto the sidewall 116. Thus, when the upper turntable 110 rotates, the loading arm 130 rotates together with the upper turntable 110.

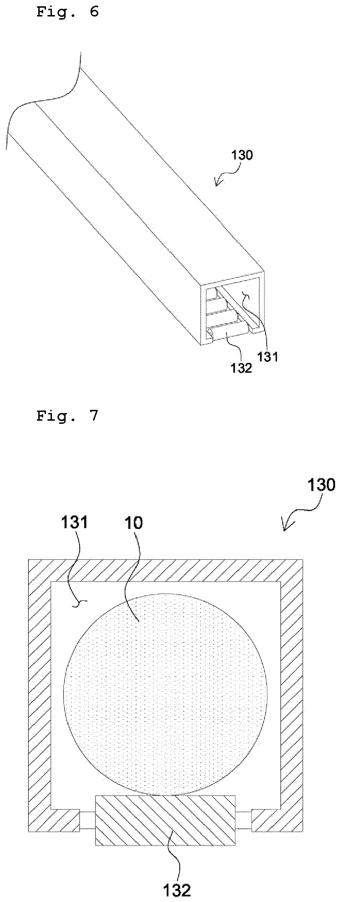

The loading arm 130 guides the submarine cable 10, which is to be brought to the lower turntable 120 via the path, to be moved in the vertical direction and the horizontal direction. FIG. 6 is a partial perspective view of the loading arm 130. FIG. 7 is a cross-sectional view of the loading arm 130. Referring to FIGS. 6 and 7, the loading arm 130 may include therein a space 131 through which the submarine cable 10 is moved, and include a roller 132 at the bottom thereof for smooth movement of the submarine cable 10. For convenience of manufacture of the loading arm 130, the loading arm 130 is illustrated as having a tetragonal cross section but is not limited thereto and may be formed in various shapes.

When the loading arm 130 is provided on the sidewall 116 of the opening 113, the loading arm 130 may have a curved part having a certain radius of curvature. That is, the loading arm 130 may be spaced a certain distance from a center of the opening 113, and include the curved part so that a cable moving path to the lower turntable 120 has the certain radius of curvature. Since a path of movement of the submarine cable 10 between the upper turntable 110 and the lower turntable 120 has the radius of curvature due to the curved part of the loading arm 130, a degree of torsion stress applied to the submarine cable 10 during the winding of the submarine cable 10 around the lower turntable 120 may be lower than that when only a linear cable moving path is provided. In this case, the radius of curvature of the loading arm 130 may be determined to be equal to or greater than a minimum bending radius (MBR) of the submarine cable 10. When the radius of curvature of the loading arm 130 is less than the MBR, a bending force destructing or damaging the submarine cable 10 is applied to the submarine cable 10 due to the radius of curvature of the loading arm 130 during movement of the submarine cable 10 through the loading arm 130. Accordingly, the loading arm 130 is arranged to have a radius of curvature which is equal to or greater than the MBR of the submarine cable 10. To this end, a radius of the opening 130 of the upper turntable 110 may be determined to be equal to or greater than the MBR of the submarine cable 10. The MBR of the submarine cable 10 may be determined by a diameter D of the submarine cable 10. For example, the MBR may be determined to be about 15 to 20 times the diameter D of the submarine cable 10.

When the loading arm 130 is fixed on the upper turntable 110, load may be concentrated in a direction in which the loading arm 130 is fixed. Thus, the rotation of the upper turntable 110 may be interfered when the upper turntable 110 rotates. Accordingly, a counter weight (not shown) corresponding to the loading arm 130 may be provided at a side of the upper turntable 110 opposite to the loading arm 130. The counter weight maybe installed at a location opposite to the loading arm 130.

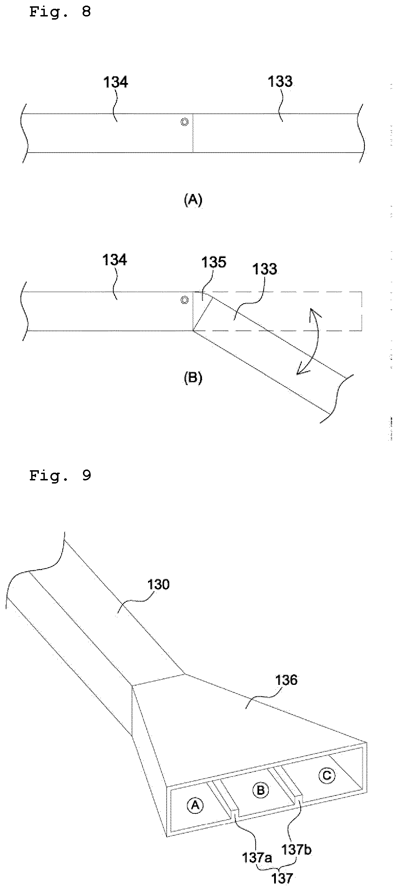

When the submarine cable 10 is wound on a central part of the lower turntable 120 toward an outer side of the lower turntable 120 through the loading arm 130, the submarine cable 10 need be moved from the central part of the lower turntable 120 to the outer side thereof as the submarine cable 10 is stacked. Furthermore, when the submarine cable 10 is wound around the lower turntable 120 through the loading arm 130, a height of the submarine cable 10 stacked in an accommodation part of the lower turntable 120 continuously increases. Thus, the loading arm 130 should guide the submarine cable 10 while moving in the vertical direction. FIG. 8 is a schematic diagram illustrating a structure in which the loading arm 130 rotates in the vertical direction. FIG. 9 illustrates a structure in which the submarine cable 10 may be moved in the horizontal direction through the loading arm 130.

Referring to FIG. 8, the loading arm 130 includes at least one joint part 135. When opposite sides of the loading arm 130 with respect to the joint part 135 are defined as a first loading arm 133 and a second loading arm 134, the first loading arm 133 illustrated in FIG. 8 (A) may rotate by a certain angle about the second loading arm 134 with respect to the joint part 135, as illustrated in FIG. 8 (B) . The submarine cable 10 may be controlled to be moved in the vertical direction through the rotation of the first loading arm 130.

Referring to FIG. 9, an extension part 136 may be provided at an end portion of the loading arm 130. The extension part 136 may include a guide bar 137 to adjust a position of the submarine cable 10 in the horizontal direction. For example, when the guide bar 137 includes two guide bars, e.g., a first guide bar 137a and a second guide bar 137b, locations on the extension part 136 may be sequentially defined as a first location A, a second location B, and a third location C in a direction from left to right.

In this case, when the submarine cable 10 is wound adjacent to the central part of the lower turntable 120 at the first location A on the extension part 136 and is continuously wound toward the outer side of the lower turntable 120, an operator lifts the submarine cable 10 and moves it to the second location B while passing the first guide bar 137a. Similarly, when the submarine cable 10 is wound around the lower turntable 120 at the second location B and need be moved, the submarine cable 10 is lifted and moved to the third location C while passing the second guide bar 137b.

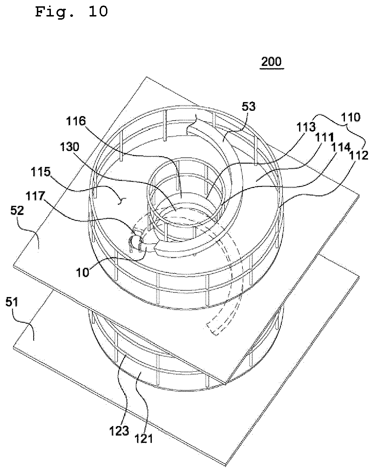

FIG. 10 is a perspective view of a double turntable 100 according to another embodiment.

Referring to FIG. 10, a path through which the submarine cable 10 passes is formed at a base 111. That is, unlike in the previous embodiment, the submarine cable 10 to be brought to an upper turntable 110 through a guide arm 53 is not moved downward via an opening 113 of the upper turntable 110 but is moved downward via a through-hole 117 formed adjacent to the opening 113 of the base 111. In this case, a loading arm 130 is located below the through-hole 117 and guides the submarine cable 10 passing through the through-hole 117 to be brought to the lower turntable 120.

In the present embodiment, the path through which the submarine cable 10 passes is formed using the through-hole 117 adjacent to the opening 113 rather than the opening 113 of the base 111, when compared to the previous embodiment. Thus, when the opening 113 has the same diameter, a radius of curvature of the loading arm 130 according to the present embodiment is greater than that of the loading arm 130 according to the previous embodiment. As the radius of curvature is increased, a bending force applied to the submarine cable 10 may be decreased to prevent the submarine cable 10 from being destructed or damaged.

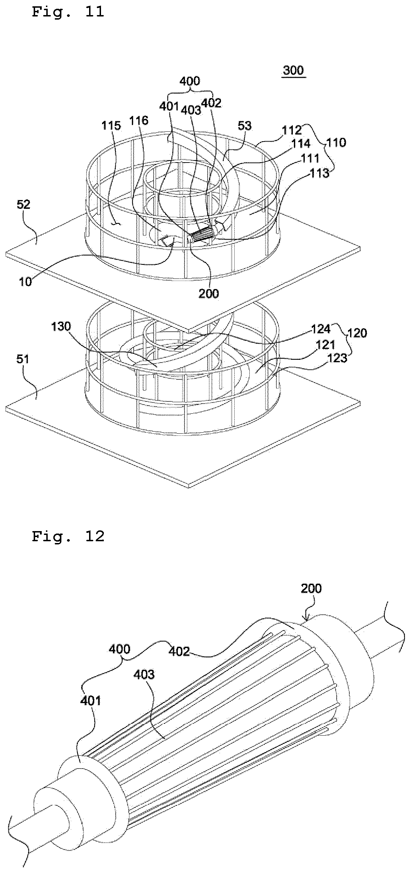

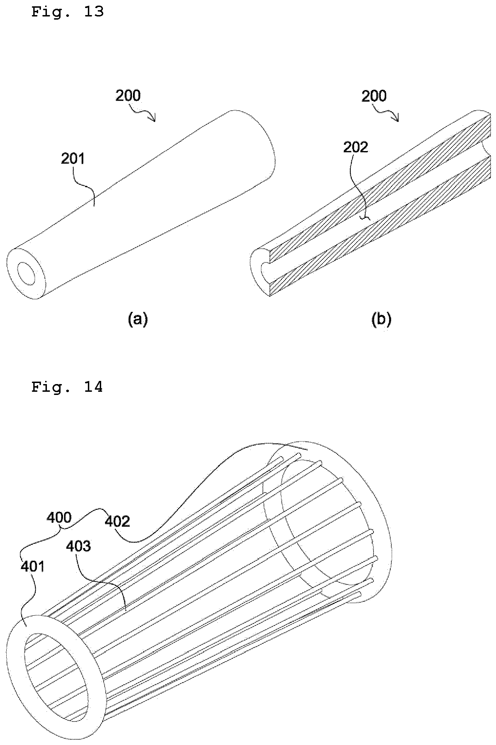

FIG. 11 is a perspective view of a double turntable 300 according to another embodiment. FIG. 12 is a perspective cross-sectional view of a band stiffener 200 and a displacement sensor 400 illustrated in FIG. 11. FIG. 13 illustrates a perspective view and a cross-sectional view of the band stiffener 200. FIG. 14 is a perspective view of the displacement sensor 400.

Referring to FIGS. 11 to 13, the double turntable 300 according to another embodiment may further include the band stiffener 200. The band stiffener 200 may be provided on an end portion of a guide arm 53 facing an upper turntable 110 to cover a submarine cable 10. Alternatively, the band stiffener 200 may be provided on an end portion of a loading arm 130 facing the lower turntable 120.

The band stiffener 200 on the end portion of the guide arm 53 or the end portion of the loading arm 130 may prevent the submarine cable 10 from being bent to a radius of curvature which is less than an MBR when the submarine cable 10 is wound around the double turntable 300. In one embodiment, when the submarine cable 10 is wound around the upper turntable 110 after being wound around the lower turntable 120, the lower turntable 120 and the upper turntable 110 rotate at the same speed. However, the speeds of rotation of the lower turntable 120 and the upper turntable 110 may become different due to an abnormal operation, and the band stiffener 200 may prevent the submarine cable 10 from being bent to a curvature which is less than the MBR.

The band stiffener 200 may be formed of a material having a certain degree of hardness and thus may resist a bending force to be applied to the submarine cable 10. Accordingly, when the double turntable 300 operates abnormally, the bending of the submarine cable 10 may be limited by the band stiffener 200.

In one embodiment, as illustrated in FIG. 13, the band stiffener 200 may include a pipe type body member 201 in which an accommodation part 202 is formed in a lengthwise direction to accommodate the submarine cable 10 passing through the accommodation part 202.

The body member 201 of the band stiffener 200 may be in a hollow pipe shape formed of a flexible material. In the body member 201, the accommodation part 202 is provided to accommodate the submarine able 10 connected to the inside of the body member 201. A diameter of the accommodation part 202 may be uniform. The diameter of the accommodation part 201 is greater than an external diameter of the submarine cable 10 such that the submarine cable 10 may easily pass through the accommodation part 201.

An external diameter of the body member 201 may decrease in a direction in which the submarine cable 10 is pulled out when the submarine cable 10 is wound around the double turntable 300. That is, the body member 201 may taper in the direction in which the submarine cable 10 is pulled out when the submarine cable 10 is wound around the double turntable 300. Thus, a degree of hardness of an end of the body member 201 having a longer external diameter may be greater than that of hardness of another end of the body member 201 having a shorter external diameter. Accordingly, as a degree to which the submarine cable 10 is bent increases, the degree of hardness of the body member 201 may increase, thereby limiting the bending of the submarine cable 10 to a large extent.

In one embodiment, the band stiffener 200 may be divided in half in the lengthwise direction and be detachably attached to the end parts of the guide arm 53 and the loading arm 130. That is, when the submarine cable 10 is wound around the lower turntable 120, only the lower turntable 120 rotates and thus the submarine cable 10 is pulled out of the end portion of the loading arm 130 facing the lower turntable 120 and wound around the lower turntable 120. Thus, the band stiffener 200 may be attached to the end portion of the loading arm 130 to prevent the submarine cable 10 from being bent when the double turntable 300 operates abnormally. In contrast, when the submarine cable 10 is wound around the upper turntable 110, the submarine cable 10 is pulled out of the end portion of the guide arm 53 and wound around the upper turntable 110. Thus, the band stiffener 200 attached to the end portion of the loading arm 130 is removed and mounted on another end portion of the loading arm 130, thereby preventing the submarine cable 10 from being bent when the double turntable 300 operates abnormally.

The body member 130 of the stiffener 100 may be formed of a resin material. For example, the band stiffener 200 may be formed of urethane.

According to another embodiment of the present invention, the double turntable 300 may further include a displacement sensor 400. The displacement sensor 400 may be disposed on an outer surface of the band stiffener 200 as illustrated in FIGS. 11 and 12, but the present invention is not limited thereto and the displacement sensor 400 may be disposed on an inner side surface of the accommodation part 202 of the band stiffener 200.

The displacement sensor 400 may measure a degree to and a direction in which the submarine cable 10 is bent when the submarine cable 10 is wound around the upper and lower turntables 110 and 120.

FIG. 14 is a perspective view of the displacement sensor 400.

Referring to FIG. 14, the displacement sensor 400 may include a first fixing member 401 and a second fixing member 402 which are arranged apart from each other on the submarine cable 10 or the band stiffener 200 and through which the submarine cable 10 or the band stiffener 200 passes, and at least one connecting member 403 connecting the first fixing member 401 and the second fixing member 402.

In the displacement sensor 400, the first fixing member 401 and the second fixing member 402 are fixed on the submarine cable 10 or the band stiffener 200 to be spaced apart from each other, and the connecting member 403 having elasticity is located between the first fixing member 401 and the second fixing member 402. Thus, when the submarine cable 10 or the band stiffener 200 is bent, the connecting member 403 is also bent. Accordingly, the degree and direction of the bending of the submarine cable 10 may be measured on the basis of a change in a length of the connecting member 403 and a direction in which the connecting member 403 is bent.

In another embodiment of the present invention, the double turntable 300 may prevent the submarine cable 10 from being bent and damaged by controlling the speed of rotation of the upper turntable 110 or the lower turntable 120 according to the degree and direction of the bending of the submarine cable 10 measured by the displacement sensor 400. That is, the submarine cable 10 may be bent or damaged due to an excessive degree of bending stress or tension applied thereto when an abnormal operation occurs, e.g., when the speeds of rotation of the lower turntable 120 and the upper turntable 110 are different.

Thus, according to another embodiment of the present invention, the double turntable 300 may decrease a degree of bending stress or tension to be applied to the submarine cable 10 by controlling the speed of rotation of the lower turntable 120 or the upper turntable 110.

In detail, when an abnormal operation occurs, e.g., when the lower turntable 120 rotates faster than the upper turntable 110 or when the lower turntable 120 rotates but the upper turntable 110 does not rotate, the submarine cable 10 may be bent and the bending of the submarine cable 10 may be identified by measuring a degree and direction of the bending of the submarine cable 10 by the displacement sensor 400. According to another embodiment of the present invention, in the double turntable 300, the speed of rotation of the upper turntable 110 may be increased to rotate the upper turntable 110 at substantially the same speed as the lower turntable 120. When the speed of rotation of the upper turntable 110 is increased as described above, a bending force may be applied to the submarine cable 10 in a direction opposite to the direction in which the submarine cable 10 is bent due to the abnormal operation, thereby decreasing a degree of the bending of the submarine cable 10 due to the abnormal operation.

When the lower turntable 120 rotates more slowly than the upper turntable 110, the speed of rotation of the upper turntable 110 may be decreased to rotate the upper turntable 110 at substantially the same speed as the lower turntable 120. When the upper turntable 110 rotates but the lower turntable 120 does not rotate, the rotation of the upper turntable 110 may be controlled to be stopped so that a bending force may be applied to the submarine cable 10 in a direction opposite to a direction in which the submarine cable 10 is bent due to an abnormal operation, thereby decreasing a degree of the bending of the submarine cable 10 due to the abnormal operation.

Hereinafter, a method of winding the submarine cable 10 around the double turntable 100 having the above-described structure will be described.

In order to wind the submarine cable 10, first, one end portion of the submarine cable 10 is fixed on the lower turntable 120 via the upper turntable 110. That is, when both the upper turntable 110 and the lower turntable 120 are provided to rotate independently, the submarine cable 10 is first wound around the lower turntable 120 and is then wound around the upper turntable 110. To this end, the submarine cable 10 passing through the guide arm 53 is drawn downward via the path of the upper turntable 110 and then is moved to the lower turntable 120 through the loading arm 130. An end portion of the submarine cable 10 drawn from the loading arm 130 is fixed on the lower turntable 120.

Next, the submarine cable 10 is wound around the lower turntable 120 by rotating the lower turntable 120 at a certain speed. In this case, the upper turntable 110 is kept stopped without being rotated, and the submarine cable 10 is wound around the lower turntable 120 by rotating only the lower turntable 120 at the certain speed, e.g., at a speed of 5 to 10 m/min. In this case, positions of the submarine cable 10 guided by the loading arm 130 in vertical and horizontal directions may be controlled by the joint part 135 and the extension part 136 of the loading arm 130.

However, as a length of the submarine cable 10 to be wound around the lower turntable 120 increases, a portion of the submarine cable 10 which is earlier wound around the lower turntable 120 is pressurized by a portion of the submarine cable 10 which is later wound around the lower turntable 120. As more portions of the submarine cable 10 are wound around the lower turntable 120, pressure applied to earlier wound portions of the submarine cable 10 increases and thus the earlier wound portions of the submarine cable 10 may be destructed or damaged by the pressure when the pressure exceeds a certain reference value. Accordingly, a pressure sensor (not shown) may be further provided to sense load on the submarine cable 10 wound around the lower turntable 120 so as to prevent such damage to the submarine cable 10. A length of the submarine cable 10 to be wound around the lower turntable 120 may be controlled on the basis of the load on the submarine cable 10 sensed by the pressure sensor, so that the pressure to be applied to the earlier wound portions of the submarine cable 10 may not exceed the reference value.

After the submarine cable 10 is wound by a certain length around the lower turntable 120, the submarine cable 10 is wound around the upper turntable 110 by rotating the upper turntable 110 at the same speed as the lower turntable 120. That is, the upper turntable 110 which is in a stopped state is rotated at the same speed as the lower turntable 120 to wind the submarine cable 10 around the upper turntable 110.

In detail, for the winding of the submarine cable 10 around the upper turntable 110, the rotation of the lower turntable 120 is stopped after the submarine cable 10 is wound by the certain length around the lower turntable 120, a guard (not shown) is mounted on the submarine cable 10 exposed between the upper turntable 110 and the lower turntable 120, and thereafter, the upper turntable 110 and the lower turntable 120 are rotated at the same speed.

When the submarine cable 10 exposed between the upper turntable 110 and the lower turntable 120 is neglected, the submarine cable 10 is exposed for a long time period during a sailing with the vessel 50 and thus damage, such as corrosion, may be caused to the skin of the submarine cable 10. Accordingly, in order to prevent this problem, the guard is mounted on an exposed region of the submarine cable 10.

When the submarine cable 10 is wound around the upper turntable 110 by rotating the upper turntable 110 and the lower turntable 120 at the same speed, the speeds of rotation of the upper turntable 110 and the lower turntable 120 are preferably substantially the same. If the speeds of rotation of the upper turntable 110 and the lower turntable 120 are different, tension is applied to the submarine cable 10 between the upper turntable 110 and the lower turntable 120 due to the speed difference and thus the submarine cable 10 may be damaged. Thus, position sensors may be further provided to respectively sense the speeds of rotation of the upper turntable 110 and the lower turntable 120. For example, a controller controlling the speeds of rotation of the upper turntable 110 and the lower turntable 120 determines whether the speeds of rotation of the upper turntable 110 and the lower turntable 120 are the same by calculating the speeds of rotation on the basis of position signals received from the position sensors, and controls the speeds of rotation to be the same, when the speeds of rotation are different, by controlling at least one of the driving parts of the respective upper and lower turntables 110 and 120.

The pressure sensor included in the lower turntable 120 is also applicable to the upper turntable 110. By using the pressure sensor, a length of the submarine cable 10 to be wound around the upper turntable 110 may be appropriately determined.

When the submarine cable 10 is wound around the upper turntable 110 after being wound around the lower turntable 120, the speeds of rotation of the lower turntable 120 and the upper turntable 110 should be synchronized with each other, i.e., the speeds of rotation should be the same, so that the submarine cable 10 to be wound around the upper turntable 110 after being wound around the lower turntable 120 may be prevented from being bent. However, the submarine cable 10 may be bent when the speeds of rotation of the lower turntable 120 and the upper turntable 110 become different due to an abnormal operation. When a radius of curvature of the bent submarine cable 10 is less than an MBR, the submarine cable 10 may be damaged.

The double turntable 300 according to another embodiment of the present invention is capable of controlling the speed of rotation of the lower turntable 120 or the upper turntable 110 to decrease a degree of bending of the submarine cable 10 when the submarine cable 10 is bent due to an abnormal operation as described above.

In detail, when the lower turntable 120 rotates faster than the upper turntable 110 or when the lower turntable 120 rotates but the upper turntable 110 does not rotate, the submarine cable 10 may be bent and the bending of the submarine cable 10 is measured by measuring a degree and direction of the bending of the submarine cable 10 by the displacement sensor 400. Thus, in the double turntable 300 according to another embodiment of the present invention, the upper turntable 110 may be rotated at substantially the same speed as the lower turntable 120 by increasing the speed of rotation of the upper turntable 110. As described above, when the speed of rotation of the upper turntable 110 is increased, a bending force may be applied to the submarine cable 10 in a direction opposite to the direction in which the submarine cable 10 is bent due to the abnormal operation, thereby decreasing the degree of the bending of the submarine cable 10 due to the abnormal operation.

When the lower turntable 120 rotates more slowly than the upper turntable 110, the speed of rotation of the upper turntable 110 may be decreased to rotate the upper turntable 110 at substantially the same speed as the lower turntable 120. When the upper turntable 110 rotates but the lower turntable 120 does not rotate, the rotation of the upper turntable 110 is controlled to be stopped and thus a bending force is applied to the submarine cable 10 in a direction opposite to the direction in which the submarine cable 10 is bent due to the abnormal operation, thereby decreasing the degree of the bending of the submarine cable 10 due to the abnormal operation.

While the present invention has been described above with respect to exemplary embodiments thereof, it would be understood by those skilled in the art that various changes and modifications may be made without departing from the technical conception and scope of the present invention. Thus, it is clear that all modifications are included in the technical scope of the present invention as long as they include the components as claimed in the claims of the present invention.

## Claims

1. A dual turntable, for a submarine cable, around which the submarine cable is wound, the dual turntable comprising:
a lower turntable configured to be rotatable such that the submarine cable is wound therearound;
an upper turntable configured to be rotatable independently from the lower table such that the submarine cable is wound around the upper turntable after being wound by a certain length around the lower turntable, the upper turntable being located above the lower turntable and including a path via which the submarine cable passes through to be wound around the lower turntable; and
a loading arm configured to be rotated in connection with the upper turntable and to guide the submarine cable moved toward the lower turntable via the path to be movable in a vertical direction and a horizontal direction.

2. The dual turntable of claim 1, wherein the loading arm comprises a curved part having a radius of curvature which is greater than or equal to a minimum bending radius (MBR) of the submarine cable.

3. The dual turntable of claim 2, wherein the upper turntable comprises :
a base including an opening in a central portion thereof; and
an inner wall and an outer wall respectively provided at an inner side and an outer side of the base to form an accommodation part at the base to accommodate the submarine cable.

4. The dual turntable of claim 3, wherein the path through which the submarine cable passes is formed at the base to be adjacent to the opening.

5. The dual turntable of claim 1, wherein the upper turntable comprises a counter weight corresponding to a load of the loading arm, the counter weight being located at a side of the upper turntable opposite the loading arm.

6. The dual turntable of claim 1, further comprising position sensors configured to respectively sense speeds of rotation of the respective upper and lower turntables.

7. The dual turntable of claim 1, further comprising a pressure sensor configured to sense load on the submarine cable wound around the upper turntable and load on the submarine cable wound around the lower turntable.

8. The dual turntable of claim 1, wherein the loading arm comprises at least one joint part for movement of the submarine cable in the vertical direction.

9. The dual turntable of claim 1, wherein the loading arm comprises an extension part for movement of the submarine cable in the horizontal direction.

10. The dual turntable of claim 1, further comprising a band stiffener configured to prevent the submarine cable from being bent to a radius of curvature which is less than a minimum bending radius (MBR) when the submarine cable is wound around the upper turntable, the band stiffener being provided on an end portion of the loading arm facing the upper turntable to cover the submarine cable.

11. The dual turntable of claim 10, wherein the band stiffener is arranged between a guide arm and the loading arm, the guide arm guiding the submarine cable to the dual turntable from the outside.

12. The dual turntable of claim 10, wherein, when the submarine cable is bent, a degree of hardness of the band stiffener increases and limits the bending of the submarine cable.

13. The dual turntable of claim 10, wherein the band stiffener comprises a pipe type body member in which an accommodation part is formed in a lengthwise direction to allow the submarine cable to pass therethrough and accommodate the submarine cable therein.

14. The dual turntable of claim 13, wherein the body member is formed of a resin material,
the accommodation part of the body member has a uniform diameter, and
an external diameter of the body member has a diameter reduction part tapering toward the loading arm.

15. The dual turntable of claim 1 or 10, further comprising a displacement sensor configured to measure a degree and direction of bending the submarine cable when the submarine cable is wound around the double turntable.

16. The dual turntable of claim 15, wherein the displacement sensor is arranged on the submarine cable or the band stiffener.

17. The dual turntable of claim 15, wherein the displacement sensor comprises:
a first fixing member and a second fixing member configured to allow the submarine cable or the band stiffener to pass therethrough, the first fixing member and the second fixing member being arranged on the submarine cable or the band stiffener to be spaced apart from each other; and
at least one connecting member configured to connect the first fixing member and the second fixing member,
wherein the degree and direction of bending the submarine cable are measured on the basis of a change in a length of the connecting part bent when the submarine cable or the band stiffener is bent and a direction of the bending of the connecting part.

18. The dual turntable of claim 15, wherein, when the submarine cable is bent due to a difference between a speed of rotation of the lower turntable and a speed of rotation of the upper turntable during winding of the submarine cable around the upper turntable after the submarine cable is wound around the lower turntable, the speed of rotation of the lower turntable or the upper turntable is controlled to reduce the degree of bending of the submarine cable.

19. The dual turntable of claim 18, wherein, when the lower turntable rotates faster than the upper turntable or when the lower turntable rotates but the upper turntable does not rotate, the speed of rotation of the upper turntable is increased to rotate the upper turntable at substantially the same speed as the lower turntable.

20. The dual turntable of claim 18, wherein, when the lower turntable rotates more slowly than the upper turntable, the speed of rotation of the upper turntable is reduced by rotate the upper turntable at substantially the same speed as the lower turntable.

21. The dual turntable of claim 18, wherein, when the upper turntable rotates but the lower turntable does not rotate, the rotation of the upper turntable is stopped.

22. A method of winding a submarine cable around the dual turntable of any one of claims 1 to 14 by winding the submarine cable by a certain length around the lower turntable via the upper turntable and winding the submarine cable around the upper turntable, the method comprising:
fixing one end portion of the submarine cable drawn toward the lower turntable through the loading arm onto the lower turntable;
winding the submarine cable around the lower turntable by rotating the lower turntable at a certain speed; and
winding the submarine cable around the upper turntable by rotating the upper turntable at substantially the same speed as the lower turntable after the submarine cable is wound by the certain length around the lower turntable.

23. The method of claim 22, wherein the winding of the submarine cable around the lower turntable and the winding of the submarine cable around the upper turntable comprise moving the submarine cable in a moving path spaced a certain distance from a center of an opening of the upper turntable and having a radius of curvature which is greater than or equal to a minimum bending radius (MBR) of the submarine cable.

24. The method of claim 23, wherein the winding of the upper turntable around the submarine cable further comprises:
stopping the rotation of the lower turntable after the submarine cable is wound by the certain length around the lower turntable; and
rotating the upper turntable and the lower turntable at the same speed.
